# EUROPEAN PATENT APPLICATION

(11) **EP 4 704 001 A1**
(43) Date of publication of application: **04.03.2026**
(21) Application number: 25194596.0
(22) Date of filing: 07.08.2025
(51) Int. Cl.: G06Q 10/109, H04L 12/18, H04L 65/403, G06N 3/0475

(54) **IDENTIFYING A VIRTUAL MEETING FOR ABSENT USER PARTICIPATION**

(30) Priority: 29.08.2024 US 202418819845
(71) Applicant: GOOGLE LLC, Mountain View CA 94043 (US)
(72) Inventor: SHEN, Jennifer Iting, Mountain View, CA 94043 (US); MEJIA ABREU, Felix David, Mountain View, CA 94043 (US); LEVIN, Dmitry Denisovich, Mountain View, CA 94043 (US); OLSON, Sara Lynn, Mountain View, CA 94043 (US); VOLKOV, Anton, Mountain View, CA 94043 (US); BARLOW, Joy Julia, Mountain View, CA 94043 (US); CHIN, Constance Moser, Mountain View, CA 94043 (US); CALLAS, Jan Arvid Kristofer, Mountain View, CA 94043 (US); SHERNAN, Ethan Samuel, Mountain View, CA 94043 (US); MRUTHYUNJAYA, Ravindra, Mountain View, CA 94043 (US); SANGLAJI, Maryam, Mountain View, CA 94043 (US); DALLAFINA, Alessandro, 8002 Zurich (CH); MONTAY, Francois, 8002 Zurich (CH); SCHIEFFER, Stella Viktoria, 8002 Zurich (CH); LIU, Decheng, Mountain View, CA 94043 (US); HUTCHINGS, Steven Leon, Mountain View, CA 94043 (US); ANANTHU, Venkata Satyendra K, Mountain View, CA 94043 (US)
(74) Representative: Crook, Hugh Alexander

(57) **Abstract**

A method for identifying a virtual meeting for absent user participation includes identifying, by a calendar application of a first user and based on one or more calendar event criteria, a calendar event that corresponds to a virtual meeting. The first user of the calendar application may be invited to attend the virtual meeting. The method includes causing a calendar application UI to be presented to the first user. The calendar application UI may include a UI element requesting that virtual meeting information be provided to the first user who is unable to attend the virtual meeting. The method includes, in response to a user activation of the UI element, providing a virtual meeting information request of the first user to a virtual meeting application.

## Description

### TECHNICAL FIELD

Aspects and implementations of the present disclosure relate to virtual meetings and more specifically to identifying a virtual meeting for absent user participation.

### BACKGROUND

Virtual meetings can take place between multiple participants via a virtual meeting platform. A virtual meeting platform can include tools that allow multiple client devices to be connected over a network and share each other's audio (e.g., voice of a user recorded via a microphone of a client device) and/or video stream (e.g., a video captured by a camera of a client device, or video captured from a screen image of the client device) for efficient communication. To this end, the virtual meeting platform can provide a user interface that includes multiple regions to present the video stream of each participating client device.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

An aspect of the disclosure provides a method. The method includes identifying, by a calendar application of a first user and based on one or more calendar event criteria, a calendar event that corresponds to a virtual meeting. The first user of the calendar application can be invited to attend the virtual meeting. The method includes causing a calendar application user interface (UI) to be presented to the first user. The calendar application UI may include a UI element requesting that virtual meeting information be provided to the first user who is unable to attend the virtual meeting. The method includes, in response to a user activation of the UI element, providing a virtual meeting information request of the first user to a virtual meeting application.

Another aspect of the disclosure provides a system. The system includes a memory and a processing device coupled to the memory. The processing device is configured to perform operations. The operations include identifying, by a calendar application of a first user and based on one or more calendar event criteria, a calendar event that corresponds to a virtual meeting. The first user of the calendar application can be invited to attend the virtual meeting. The operations include causing a calendar application user interface (UI) to be presented to the first user. The calendar application UI may include a UI element requesting that virtual meeting information be provided to the first user who is unable to attend the virtual meeting. The operations include, in response to a user activation of the UI element, providing a virtual meeting information request of the first user to a virtual meeting application.

Another aspect of the disclosure provides a non-transitory computer-readable storage medium including instructions that, when executed by a processing device, cause the processing device to perform operations. The operations include identifying, by a calendar application of a first user and based on one or more calendar event criteria, a calendar event that corresponds to a virtual meeting. The first user of the calendar application can be invited to attend the virtual meeting. The operations include causing a calendar application user interface (UI) to be presented to the first user. The calendar application UI may include a UI element requesting that virtual meeting information be provided to the first user who is unable to attend the virtual meeting. The operations include, in response to a user activation of the UI element, providing a virtual meeting information request of the first user to a virtual meeting application.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture for identifying a virtual meeting for absent user participation, in accordance with some implementations of the present disclosure.
**FIG. 2A** illustrates a schematic block diagram for an artificial intelligence (AI) training subsystem of a virtual meeting platform, in accordance with some implementations of the present disclosure.
**FIG. 2B** illustrates a schematic block diagram for an AI inference subsystem of a virtual meeting platform, in accordance with some implementations of the present disclosure.
**FIG. 3** illustrates a flow diagram of a method for identifying a virtual meeting for absent user participation, in accordance with some implementations of the present disclosure.
**FIG. 4** illustrates an example user interface for a calendar application, in accordance with some implementations of the present disclosure.
**FIG. 5** illustrates another example user interface for a calendar application, in accordance with some implementations of the present disclosure.
**FIG. 6** illustrates an example user interface for a virtual meeting, in accordance with some implementations of the present disclosure.
**FIG. 7** illustrates an example user interface for a calendar application, in accordance with some implementations of the present disclosure.
**FIG. 8** illustrates a block diagram depicting an example computer system, in accordance with some implementations of the present disclosure.

### DETAILED DESCRIPTION

Aspects of the present disclosure relate to identifying a virtual meeting for absent user participation. A virtual meeting platform can enable video-based conferences between multiple participants via respective client devices that are connected over a network and share each other's audio (e.g., voice of a user recorded via a microphone of a client device) and/or video streams (e.g., a video captured by a camera of a client device) during a virtual meeting. In some instances, a virtual meeting platform can enable a significant number of client devices (e.g., up to one hundred or more client devices) to be connected via the virtual meeting. A participant of a virtual meeting can speak to the other participants of the virtual meeting. Some existing virtual meeting platforms can provide a user interface (UI) to each client device connected to the virtual meeting, where the UI displays visual items corresponding to the video streams shared over the network in a set of regions in the UI.

Some users may not be able to attend a virtual meeting or may not be able to attend the entirety of a virtual meeting, for example, because the user can have multiple meetings scheduled at the same time, or a first meeting can last longer than scheduled and can overlap with a subsequent meeting. In a typical virtual meeting, if a user is not present during the virtual meeting or not present for a portion of the meeting, the user cannot participate in the virtual meeting or in the missed portion and cannot provide input on the points being discussed. This presents several disadvantages. For example, the user that is invited to the virtual meeting but is unable to attend cannot provide input to the points discussed during the virtual meeting, resulting in the meeting being less efficient and effective. Additionally, a participant present at the virtual meeting may need to take notes for the absent user, which can be distracting for the note-taking participant and may not allow the note-taking participant to fully participate in the meeting. Furthermore, the note-taking user can miss some discussion points or misinterpret the items being discussed. The note-taking user can then need to send the notes to the absent user (e.g., through email) or may need to have another virtual meeting with the absent user to provide the information the absent user missed, which can use computing system resources. Additionally, participating in a large number of virtual meetings can be exhausting for users.

Implementations of the present disclosure address the above and other deficiencies by providing systems and methods that allow a user that has been invited to attend a virtual meeting to attend the virtual meeting by proxy. User attendance by proxy may refer to a user's participation in a virtual meeting without being physically present at the virtual meeting when it is conducted. Aspects of the present disclosure allow the user attending the virtual meeting by proxy to provide discussion points or other data to be discussed during the virtual meeting for presentation during the virtual meeting. In addition or alternatively, the user attending the virtual meeting by proxy may be provided with a summary of the virtual meeting. Thus, the user may be able to participate in the virtual meeting without attending the virtual meeting.

Implementations of the present disclosure also provide systems and methods that identify a virtual meeting that is suitable for a user to attend by proxy. In one implementation, a system identifies a calendar event that a user has been invited to and determines if the calendar event meets one or more calendar event criteria. A calendar event that meets one or more of the criteria can be suitable for a user to attend by proxy. Such criteria can include a calendar event indicating the user's attendance is optional, a calendar event occurring during a time period when the user is unavailable (e.g., due to constraints such as scheduling conflict, illness, or vacation), or a calendar event in a series of calendar events where the user has declined to attend previous instances of the calendar event in the series. The system can cause a calendar application UI to present the user with an option to indicate that the user is unable to attend but will be attending the virtual meeting associated with the calendar event by proxy. Responsive to the user selecting the option to attend by proxy, the user can input discussion points or other data to be presented during the virtual meeting in the user's absence.

Aspects of the present disclosure provide technical advantages over previous solutions. Aspects of the present disclosure provide an automated process to identify calendar events associated with virtual meetings that are suitable for a user to attend by proxy. In this manner, the user does not need to spend time deciding whether to attend such virtual meetings. Such automation improves the user's virtual meeting experience and allows the user to perform other tasks instead of deciding which virtual meetings to attend and which to forgo. Aspects of the present disclosure provide a way for a user that is not present during a virtual meeting to provide discussion points or other materials for use during the virtual meeting. Aspects of the present disclosure provide access to one or more AI-generated summaries of the discussion of the provided discussion points and other materials, which increases the efficiency of the virtual meeting and the absent user. Additionally, aspects of the present disclosure reduce the need for a note-taking virtual meeting participant to follow up with the absent user, which reduces the use of computing system resources (e.g., by reducing emails sent from the note-taking participant to the absent user and reducing additional virtual meetings between the note-taking user and the absent user).

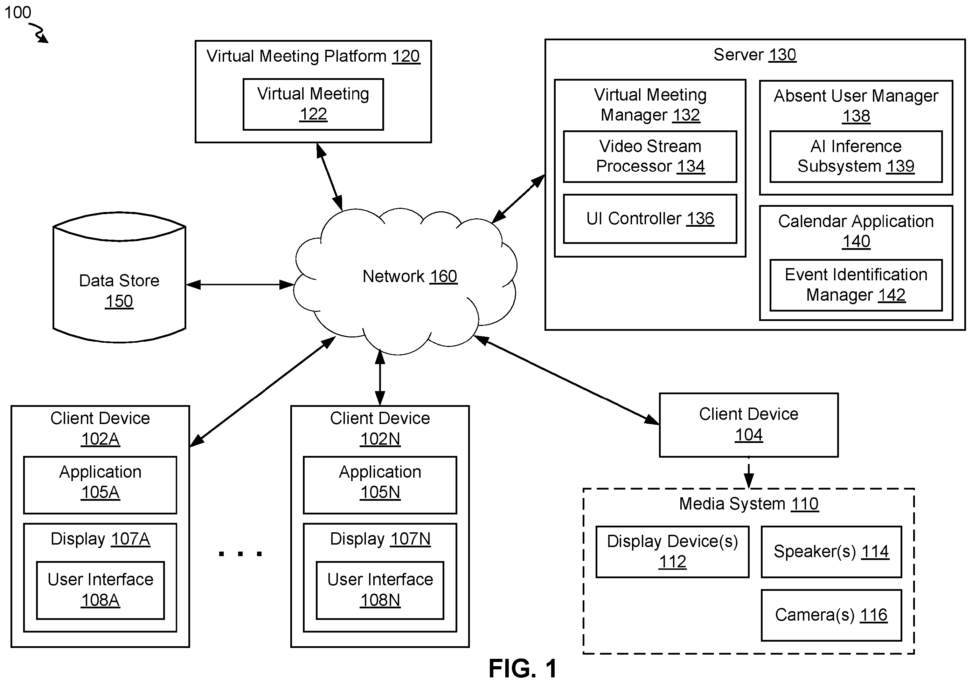

**FIG.** 1 illustrates an example system architecture 100, in accordance with implementations of the present disclosure. The system architecture 100 includes one or more client devices 102A-N or 104, a virtual meeting platform 120, a server 130, and a data store 150, each connected to a network 160.

In some implementations, the virtual meeting platform 120 enables users of one or more of the client devices 102A-N, 104 to connect with each other in a virtual meeting (e.g., a virtual meeting 122). A virtual meeting 122 refers to a real-time communication session such as a video-based call or video chat, in which participants can connect with multiple additional participants in real-time and be provided with audio and video capabilities. A virtual meeting 122 may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. The virtual meeting platform 120 can allow a user of the virtual meeting platform 120 to join and participate in a virtual meeting 122 with other users of the virtual meeting platform 120 (such users sometimes being referred to, herein, as "virtual meeting participants" or, simply, "participants"). Implementations of the present disclosure can be implemented with any number of participants connecting via the virtual meeting 122 (e.g., up to one hundred or more).

In implementations of the disclosure, a "user" or "participant" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the virtual meeting platform 120 or the virtual meeting manager 132 collects user information (e.g., information about a user's social network, social actions or activities, profession, a user's preferences, or a user's current location), or to control whether or how to receive content from the virtual meeting platform 120 or the virtual meeting manager 132 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120 or the virtual meeting manager 132.

In some implementations, the server 130 includes a virtual meeting manager 132. The virtual meeting manager 132, in one or more implementations, is configured to manage a virtual meeting 122 between multiple users of the virtual meeting platform 120. The virtual meeting manager 132 can provide the UIs 108A-N to each client device 102A-N, 104 to enable users to watch and listen to each other during a virtual meeting 122. The virtual meeting manager 132 can also collect and provide data associated with the virtual meeting 122 to each participant of the virtual meeting 122. In some implementations, the virtual meeting manager 132 provides the UIs 108A-N for presentation by client applications 105A-N. For example, the respective UIs 108A-N can be displayed on the display devices 107A-107N by the client applications 105A-N executing on the operating systems of the client devices 102A-N, 104. In some implementations, the virtual meeting manager 132 determines visual items for presentation in the UIs 108A-N during a virtual meeting 122. A visual item can refer to a UI element that occupies a particular region in the UI 108A-N and is dedicated to presenting a video stream from a respective client device 102A-N, 104. Such a video stream can depict, for example, a user of the respective client device 102A-N, 104 while the user is participating in the virtual meeting 122 (e.g., speaking, presenting, listening to other participants, watching other participants, etc., at particular moments during the virtual meeting 122), a physical conference or meeting room (e.g., with one or more participants present), a document or media content (e.g., video content, one or more images, etc.) being presented during the virtual meeting 122, etc.

In some implementations, the virtual meeting manager 132 includes a video stream processor 134 and a UI controller 136. Each of the video stream processor 134 or the UI controller 136 may include a software application (or a subset thereof) that performs certain virtual meeting functionality for the virtual meeting manager 132. The video stream processor 134 can be configured to receive video streams from one or more of the client devices 102AN, 104. The video stream processor 134 can be configured to determine visual items for presentation in the UI of such client devices 102A-N, 104 (e.g., the UIs 108-108N, discussed below) during the virtual meeting 122. Each visual item can correspond to a video stream from a client device 102A-N, 104 (e.g., the video stream pertaining to one or more participants of the virtual meeting 122). In some implementations, the virtual meeting 122 further includes, for each participant of the one or more participants, first audio data associated with an audio stream produced by a client device 102A-N, 104 of a respective participant. The video stream processor 134 can receive audio streams associated with the video streams from the client devices (e.g., from an audiovisual component of the client devices 102A-N, 104). Once the video stream processor 134 has determined visual items for presentation in the UI, the video stream processor 134 can notify the UI controller 136 of the determined visual items. The visual items for presentation can be determined based on current speaker, current presenter, order of the participants joining the virtual meeting 122, list of participants (e.g., alphabetical), etc.

In some implementations, the UI controller 136 provides the UI for the virtual meeting 122. The UI can include multiple regions. Each region can display a video stream pertaining to one or more participants of the virtual meeting 122. The UI controller 136 can control which video stream is to be displayed by providing a command to one or more client devices 102A-N, 104 that indicates which video stream is to be displayed in which region of the UI (along with the received video and audio streams being provided to the client devices 102A-N, 104). For example, in response to being notified of the determined visual items for presentation in the UI 108A-N, the UI controller 136 can transmit a command causing each determined visual item to be displayed in a region of the UI and/or rearranged in the UI.

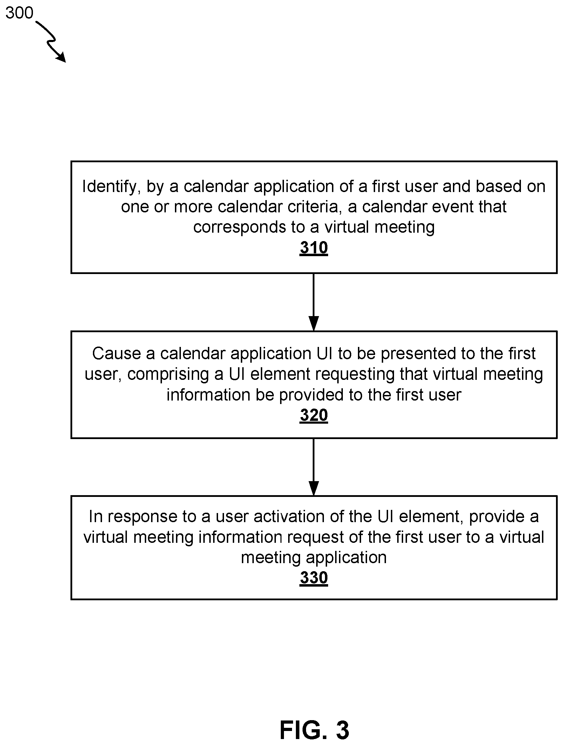

In one or more implementations, the server 130 includes an absent user manager 138. The absent user manager 138 may include a software application (or a subset thereof) that performs certain virtual meeting functionality for the virtual meeting manager 132 or the calendar application 140 (discussed below). The absent user manager 138 can be configured to present data associated with a user that is absent from the virtual meeting 122, generate one or more summaries based on the virtual meeting 122, or other virtual meeting functionality, as discussed herein. The absent user manager 138 may include an AI inference subsystem 139. The AI inference subsystem 139 may include one or more AI models configured to generate a transcript of the virtual meeting 122, generate one or more summaries of the virtual meeting 122, and perform other functionality as discussed herein. The absent user manager 138 can use the AI inference subsystem 139 to assist the absent user manager 138 in performing one or more operations. Some aspects of the functionality of the absent user manager 138 are discussed further below in relation to **FIG. 3****.**

In one implementation, the server 130 includes a calendar application 140. The calendar application 140 may include a software application (or a subset thereof) that performs calendar functionality. The calendar application 140 can provide a digital calendar to a user and allow the user to organize a calendar event, send a calendar invite associated with the calendar event to one or more other users, or perform other calendar functions. In some implementations, the calendar application 140 integrates with the virtual meeting platform 120 or the virtual meeting manager 132 to provide certain calendar functionality to the virtual meeting platform 120 or the virtual meeting manager 132, or so that the virtual meeting platform 120 or the virtual meeting manager 132 can provide certain virtual meeting functionality to the calendar application 140. For example, a link to the virtual meeting 122 can be included in a calendar event of the calendar application 140. The calendar application 140 can receive discussion points from a user that is unable to attend the virtual meeting 122, and the calendar application 140 can provide those discussion points for presentation during the virtual meeting 122, as discussed further below. While **FIG. 1** depicts the calendar application 140 executing on the server 130, in some implementations, the calendar application 140 executes on a client device 102A-N, 104.

In one implementation, a calendar invite includes a media type that allows a user to store and exchange calendaring and scheduling information for a calendar event. A calendar invite can be generated by a calendar application 140. The calendar application 140 can be configured to access a calendar invite and display information based on the calendar invite (e.g., data that indicates a user that organized the corresponding calendar event, a start time, an end time, a location of the calendar event (which may include a physical location or may include data used to access a virtual meeting 122), etc.)).

In one or more implementations, the calendar application 140 includes an event identification manager 142. The event identification manager 142 may include a software application (or a subset thereof) that identifies a calendar event of the calendar application 140 that can be suitable for a user to attend by proxy, as discussed further below. As used herein, a user using the absent user manager 138 and/or the calendar application 140 to indicate that the user is unable to attend a virtual meeting 122, provide data (e.g., discussion notes) to be presented during the virtual meeting 122, generate one or more summaries associated with the unattended virtual meeting 122, and/or perform other related operations can be referred to herein as the user attending the virtual meeting 122 by proxy.

In some implementations, each of the virtual meeting platform 120 or the server 130 include one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. The virtual meeting platform 120 can also include a website (e.g., one or more webpages) or application back-end software that can be used to enable a user to connect with other users by way of the virtual meeting 122.

In some implementations, the one or more client devices 102A-N each include one or more computing devices such as personal computers (PCs), laptops, mobile phones, smart phones, tablet computers, netbook computers, network-connected televisions, etc. The one or more client devices 102A-N can also be referred to as "user devices." Each client device 102AN can include an audiovisual component that can generate audio and video data to be streamed to the virtual meeting manager 132. The audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a particular client device 102A-N. In some implementations, the audiovisual component includes an image capture device (e.g., a camera) to capture images and generate video data (e.g., a video stream) of the captured data of the captured images.

In some implementations, the system architecture 100 includes a client device 104. The client device 104 can differ from a client device of the one or more client devices 102A-N because the client device 104 can be associated with a physical conference or meeting room. Such client device 104 can include or be coupled to a media system 110 that can include one or more display devices 112, one or more speakers 114 and one or more cameras 116. The display device 112 can be, for example, a smart display or a non-smart display (e.g., a display that is not itself configured to connect to the network 160). Users that are physically present in the room can use the media system 110 rather than their own devices (e.g., one or more of the client devices 102A-N) to participate in the virtual meeting 122, which can include other remote users. For example, the users in the room that participate in the virtual meeting 122 can control the display device 112 to show a slide presentation or watch slide presentations of other participants. Sound and/or camera control can similarly be performed. Similar to the one or more client devices 102A-N, the client device 104 can generate audio and video data to be streamed to the virtual meeting manager 132 (e.g., using one or more microphones, speakers 114 and cameras 116).

As described previously, an audiovisual component of each client device 102A-N, 104 can capture images and generate video data (e.g., a video stream) of the captured data of the captured images. In some implementations, the client devices 102A-N, 104 transmit the generated video stream to the virtual meeting manager 132. The audiovisual component of each client device 102A-N, 104 can also capture an audio signal representing speech of a user and generate audio data (e.g., an audio file or audio stream) based on the captured audio signal. In some implementations, the client devices 102A-N, 104 transmit the generated audio data to the virtual meeting manager 132.

In some implementations, each client device 102A-N or 104 includes a respective client application 105A-N, which can be a mobile application, a desktop application, a web browser, etc. The client application 105A-N can present, on a display device 107A-N of a client device 102A-N or a UI (e.g., a UI of the UIs 108A-N), one or more features of the application 105A-N for users to access the virtual meeting platform 120. For example, a user of a first client device 102A can join and participate in the virtual meeting 122 via a UI 108A presented on the display device 107A by the application 105A. The user can present a document to participants of the virtual meeting 122 via the UI 108A. Each of the UIs 108A-N can include multiple regions to present visual items corresponding to video streams of the client devices 102A-N provided to the server 130 for the virtual meeting 122. In one implementation, the client application 105A-N can present, on a display device 107A-N of a client device 102A-N or a UI, one or more features of the application 105A-N for users to access the calendar application 140. For example, a user of a first client device 102A can view the user's calendar via a UI 108A presented on the display device 107A by the application 105A.

In one or more implementations, at least some portions of the virtual meeting manager 132, the absent user manager 138 and/or the calendar application 140 are part of a client device 102A-N, 104. For example, the application 105A-N can include the absent user manager 138 and/or the calendar application 140, which can present data associated with an absent virtual meeting user, generate summaries based on the virtual meeting 122, present a calendar, generate calendar events, and perform other functionality. In some implementations, the application 105A of a first client device 102A sends the video stream produced by the client device 102A to the other client devices 102B-N, 104 and receives the video streams from the other client devices 102B-N, 104, and the applications 105A-105N can generate their respective virtual meeting UIs 108A-108N or can finalize their respective UIs 108A-N, which can have been partially generated by the UI controller 136.

In some implementations, the data store 150 is a persistent storage that is capable of storing data as well as data structures to tag, organize, and index the data. A data item can include audio data and/or video stream data, in accordance with implementations described herein. The data store 150 can be hosted by one or more storage devices, such as main memory, magnetic or optical storage-based disks, tapes, hard drives, flash memory, and so forth. In some implementations, the data store 150 is a network-attached file server, while in other implementations, the data store 150 is some other type of persistent storage such as an object-oriented database, a relational database, and so forth, that can be hosted by the virtual meeting platform 120 or one or more different machines (e.g., the server 130) coupled to the virtual meeting platform 120 using the network 160. In some implementations, the data store 150 stores portions of audio and video streams received from one or more client devices 102A-N, 104 for the virtual meeting platform 120. Moreover, the data store 150 can store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, etc.). These documents can be shared with users of the client devices 102A-N, 104 and/or concurrently editable by the users. In some implementations, the data store stores data provided by a user that is absent from the virtual meeting 122 (e.g., discussion points), one or more summaries generated by the absent user manager 138, a transcript of the virtual meeting 122, or other data, as discussed herein. In some implementations, the data store 150 can store calendar events, calendar invites, attachments to a calendar event or calendar invite, or other calendar-related data.

In some implementations, the network 160 includes a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

It should be noted that in some implementations, the functions of the virtual meeting platform 120 or the server 130 are provided by a fewer number of machines. For example, in some implementations, the server 130 is integrated into a single machine, while in other implementations, the server 130 is integrated into multiple machines. In addition, in one or more implementations, the server 130 is integrated into the virtual meeting platform 120.

In general, one or more functions described in the several implementations as being performed by the virtual meeting platform 120 or server 130 can also be performed by the client devices 102A-N, 104 in other implementations, if appropriate. In addition, in some implementations, the functionality attributed to a particular component can be performed by different or multiple components operating together. The virtual meeting platform 120 or the server 130 can also be accessed as a service provided to other systems or devices through appropriate application programming interfaces, and thus is not limited to use in websites.

Although implementations of the disclosure are discussed in terms of the virtual meeting platform 120 and users of the virtual meeting platform 120 participating in a virtual meeting 122, implementations can also be generally applied to any type of telephone call, conference call, or other technological communications methods between users. Implementations of the disclosure are not limited to virtual meeting platforms that provide virtual meeting tools to users.

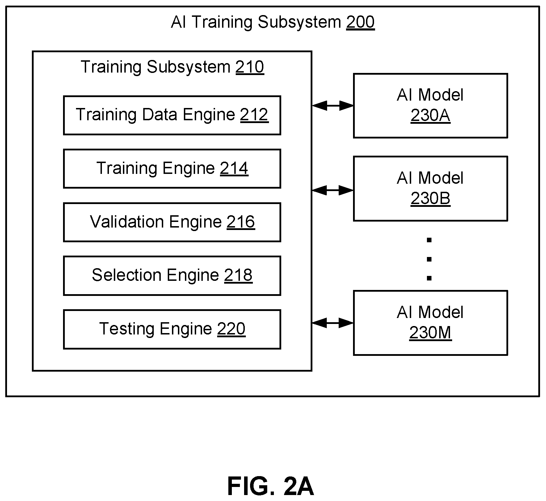

**FIG. 2A** illustrates an example AI training subsystem 200 that can be used to train one or more AI models 230A-M, in accordance with implementations of the present disclosure. As illustrated in **FIG. 2A****,** the AI training subsystem 200 can include a training subsystem 210, which may include a training data engine 212, a training engine 214, a validation engine 216, a selection engine 218, or a testing engine 220. The AI training subsystem 200 may include one or more AI models 230A-M.

In one implementation, an AI model 230A-M includes one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities can be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 230A-M includes a generative AI model. A generative AI model can deviate from a machine learning model based on the generative AI model's ability to generate new, original data, rather than making predictions based on existing data patterns. A generative AI model can include a generative adversarial network (GAN), a variational autoencoder (VAE), a large language model (LLM), or a diffusion model. In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, an AI model 230A-M is an AI model that has been trained on a corpus of data. For example, the AI model 230A-M can be an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 230A-M to learn broad elements including, image or speech recognition, general sentence structure, common phrases, vocabulary, natural language structure, and other elements. In some implementations, this first foundational model is trained using self-supervision, or unsupervised training on such datasets.

In some implementations, the second portion of training, including fine-tuning, includes unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 230A-M while training can be ranked by a user, according to a variety of factors, including accuracy, helpfulness, veracity, acceptability, or any other metric useful in the fine-tuning portion of training. In this manner, the AI model 230A-M can learn to favor these and any other factors relevant to users when generating a response. Further details regarding training are provided below.

In some implementations, an AI model 230A-M includes one or more pre-trained models, or fine-tuned models. In a non-limiting example, in some implementations, the goal of the "fine-tuning" can be accomplished with a second, or third, or any number of additional models. For example, the outputs of the pre-trained model can be input into a second AI model that has been trained in a similar manner as the "fine-tuned" portion of training above. In such a way, two more AI models can accomplish work similar to one model that has been pre-trained, and then fine-tuned.

In one implementation, the training subsystem 210 manages the training and testing of an AI model 230A-M. The training data engine 212 can generate training data. For example, in the present disclosure the training data may include textual content. The textual content may include one or more virtual meeting 122 transcripts (e.g., one or more virtual meeting transcripts)). The textual content can include other types of text data, such as text documents on various subjects. The training engine 214 can use the textual content training data to train a generative AI model 230A-M configured to generate one or more summaries of a virtual meeting 122. In another example, the training data may include calendar events, data associated with virtual meetings, or other similar data. The training engine 214 can use the training data to train an AI model 230A-M configured to identify one or more calendar events for which a user can use attend-for-me functionality.

In some implementations, the training data can include audio data. The audio data may include a recording of a person speaking. The audio data may include one or more phonemes, word fragments, words, sentences, or other portions of speech. Each piece of audio training data may include a corresponding target output that includes a text representation of the audio data of the audio training data. The training data engine 214 can use the audio training data to train a speech-to-text AI model 230A-M configured to generate a transcript of a virtual meeting 122.

In an illustrative example, the training data engine 212 can initialize a training set T to null (e.g., {}). The training data engine 212 can add the training data to the training set T and can determine whether training set T is sufficient for training a AI model 230A-M. The training set T can be sufficient for training the AI model 230A-M if the training set T includes a threshold amount of training data, in some implementations. In response to determining that the training set T is not sufficient for training, the training data engine 212 can identify additional data to use as training data. In response to determining that the training set T is sufficient for training, the training data engine 212 can provide the training set T to the training engine 214.

The training engine 214 can train an AI model 230A-M using the training data (e.g., training set T). The AI model 230A-M can refer to the model artifact that is created by the training engine 214 using the training data, where such training data can include training inputs and, in some implementations, corresponding target outputs. The training engine 214 can input the training data into the AI model 230A-M so that the AI model 230A-M can find patterns in the training data and configure itself based on those patterns.

Where the AI model 230A-M uses supervised learning, the training engine 214 can assist the AI model 230A-M in determining whether the AI model 230A-M maps the training input to the target output. Where the AI model 230A-M uses unsupervised learning, the training engine 214 can input the training data into the AI model 230A-M The AI model 230A-M can configure itself based on the input training data, but since the training data may not include a target output, the training engine 214 may not assist the AI model 230A-M in determining whether the AI model 230A-M provided a correct output during the training process.

The validation engine 216 can be capable of validating a trained AI model 230A-M using a corresponding set of features of a validation set from the training data engine 212. The validation engine 216 can determine an accuracy of each of the trained AI models 230A-M based on the corresponding sets of features of the validation set. Where the training data may not include a target output, validating a trained AI model 230A-M may include obtaining an output from the AI model 230A-M and providing the output to another entity for evaluation. The other entity may include another AI model configured to evaluation the output of the AI model 230A-M that is undergoing training. The other entity may include a human. The validation engine 216 can discard a trained AI model 230A-M that has an accuracy that does not meet a threshold accuracy or that otherwise fails evaluation. In some implementations, the selection engine 218 is capable of selecting a trained AI model 230A-M that has an accuracy that meets a threshold accuracy. In some implementations, the selection engine 218 can be capable of selecting the trained AI model 230A-M that has the highest accuracy of multiple trained AI models 230A-M. In some implementations, the selection engine 218 receives input from another AI model or a human and can select a trained AI model 230A-M based on the input.

The testing engine 220 can be capable of testing a trained AI model 230A-M using a corresponding set of features of a testing set from the training data engine 212. For example, a first trained AI model 230A that was trained using a first set of features of the training set can be tested using the first set of features of the testing set. The testing engine 220 can determine a trained AI model 230A-M that has the highest accuracy or other evaluation of all of the trained AI models 230A-M based on the testing sets.

In one implementation, the training engine 214 trains an AI model 230A. The AI model 230A may include an AI model that generates a summary of a virtual meeting 122. The training data engine 212 can generate training data that includes one or more virtual meeting transcripts, and the training engine 214 can cause the AI model 230A to undergo an AI model training process using the training data. The AI model 230A can undergo a validation and testing process using the validation engine 216 and testing engine 220.

In one implementation, the training engine 214 trains an AI model 230B. The AI model 230B may include an AI model that identifies a calendar event associated with a virtual meeting 122 that is suitable for a user to use attend-for-me functionality. The training engine 214 can cause the AI model 230B to undergo an AI model training process using the training data. The AI model 230B can undergo a validation and testing process using the validation engine 216 and testing engine 220.

In some implementations, the AI training subsystem 200 is part of the server 130, the virtual meeting manager 132, the absent user manager 138, the calendar application 140, or the event identification manager 142. Alternatively, the AI training subsystem 200 can be part of another server, system, sub-system, or it can be an independent system. In some implementations, the AI training subsystem 200 provides the trained one or more AI models 230A-M to the absent user manager 138 or the event identification manager 142.

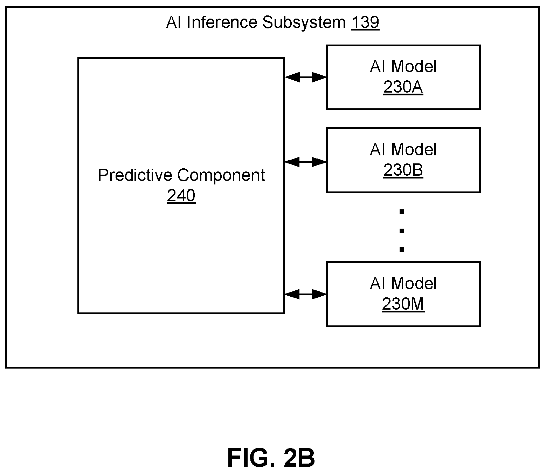

**FIG. 2B** illustrates an example AI inference subsystem 139 that the absent user manager 138 can use to perform one or more operations, in accordance with implementations of the present disclosure. The AI inference subsystem 139 may include one or more AI models 230A-M. The one or more AI models 230A-M may include one or more of the AI models 230A-M trained by the AI training subsystem 200.

In some implementations, the AI inference subsystem 139 include an AI input/output component 240. The AI input/output component 240 can be configured to feed data as input to an AI model 230A-M, e.g., a transcript of the virtual meeting 122 provided by the absent user manager 138. The AI input/output component 240 can be configured to obtain one or more outputs from the one or more AI models 230A-M and provide the one or more outputs to the absent user manager 138.

As indicated above, in some embodiments, an AI model 230A-M includes an LLM. In some embodiments, the LLM includes generative AI functionality. The AI model 230A-M can generate new content based on provided input data (e.g., a transcript of the virtual meeting 122). The generative AI model 230A-M can be supported by a prompt subsystem (not shown), which can reside on the system architecture 100. The prompt subsystem can enable a user or a component of the system architecture 100 to provide input for the generative AI model 230AM. The prompt subsystem can be configured to perform automated identification of, and facilitate retrieval of, relevant and timely contextual information for efficient and accurate processing of prompts by the AI model 230A-M. Using the network 160 (or another network), the prompt subsystem can be in communication with one or more of the virtual meeting manager 132, the absent user manager 138, the calendar application 140, or the event identification manager 142. Communications between the prompt subsystem and the AI input/output component 240 can be facilitated by a generative model application programming interface (API), in some embodiments. Communications between the prompt subsystem and the virtual meeting manager 132, the absent user manager 138, the calendar application 140, or the event identification manager 142 can be facilitated by a data management API. In additional or alternative embodiments, the generative model API translates prompts generated by the prompt subsystem into an unstructured natural-language format and, conversely, translates responses received from the AI model 230A-M into any suitable form (e.g., including any structured proprietary format as can be used by the prompt subsystem). Similarly, the data management API can support instructions that can be used to communicate data requests to the virtual meeting manager 132, the absent user manager 138, the calendar application 140, or the event identification manager 142 and formats of data received from such components.

The prompt subsystem may include (or may have access to) instructions stored on one or more tangible, machine-readable storage media of a computing device (e.g., the server 130) and executable by one or more processing devices of the computing device. In one embodiment, the prompt subsystem can be implemented on a single machine. In some embodiments, the prompt subsystem can be a combination of a client component and a server component. Alternatively, some portion of the prompt subsystem can be executed on a client computing device while another portion of the query tool can be executed on a server machine.

**FIG. 3** is a flowchart illustrating one embodiment of a method 300 for identifying a virtual meeting for absent user participation, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 300 and/or one or more of the method's 300 individual functions, routines, subroutines, or operations. In certain implementations, a single processing thread can perform the method 300. Alternatively, two or more processing threads can perform the method 300, each thread executing one or more individual functions, routines, subroutines, or operations of the method. In an illustrative example, the processing threads implementing the method 300 can be synchronized (e.g., using semaphores, critical sections, and/or other thread synchronization mechanisms). Alternatively, the processing threads implementing the method 300 can be executed asynchronously with respect to each other. Various operations of the method 300 can be performed in a different (e.g., reversed) order compared with the order shown in **FIG. 3****.** Some operations of the method 300 can be performed concurrently with other operations. Some operations can be optional. In some implementations, the absent user manager 138 and/or the event identification manager 142 perform one or more of the operations of the method 300.

At block 310, processing logic identifies, by a calendar application 140 of a first user and based on one or more calendar event criteria, a calendar event that corresponds to a virtual meeting 122. The first user of the calendar application may include a user that is invited to attend the virtual meeting 122. In some implementations, the event identification manager 142 of the calendar application 140 identifies the calendar event based on the calendar event criteria. Identifying a calendar event based on the one or more calendar criteria may include determining that the calendar event meets one or more of the calendar event criteria. A calendar event that meets one or more of the calendar event criteria may be suitable for the user to attend by proxy.

In one implementation, the calendar event criteria include the calendar event indicating that the first user's attendance of the calendar event is optional. In some implementations, the calendar event may include data indicating whether an invited user's attendance is mandatory or optional. Such data can be included in the calendar event invite used to generate the calendar event in the calendar application 140. In some cases, the first user may be unlikely to attend a calendar event if the first user's attendance is optional.

In some implementations, the calendar event criteria include the calendar event occurring during a time period when the first user has an unavailable status. The calendar application 140 can allow the first user to input a time period when the first user is unavailable (e.g., an out-of-office time period, a focus time period, a time period that includes a meeting that the user has already indicated to the user will attend, etc.).

In one implementation, the calendar event criteria include the first user having not sent a calendar event response for the calendar event. In some implementations, responsive to a user using the calendar application 140 to access a calendar invite, the calendar application 140 generates a response to the calendar invite (sometimes referred to herein as a "calendar event response"). The calendar event response may include response data indicating whether the responding user plans on attending the calendar event corresponding to the calendar invite. The response data can indicate that the user that received the calendar invite plans on attending, cannot attend, can be able to attend, or plans on attending by proxy as explained below. In some cases, the first user not having responded to a calendar invite can indicate that the user is unlikely to attend the calendar event corresponding to the calendar invite. In some implementations, the calendar event can meet the unresponded-to criteria only after a predetermined amount of time has passed since the user's calendar application 140 received the calendar invite. The predetermined amount of time may include one hour, two hours, three hours, six hours, twelve hours, 24 hours, or some other amount of time. The amount of time can provide the user an opportunity to respond to the calendar invite before the event identification manager 142 identifies the corresponding calendar event as suitable for attendance by proxy.

In some implementations, the calendar event criteria include the calendar event occurring during a predetermined time interval. The predetermined time interval may include a weekend, a holiday, after work hours, or some other predetermined time interval. The calendar event occurring during a time interval when the first user does not normally attend calendar events can indicate that the user is unlikely to attend the calendar event.

In one implementation, the calendar event includes a calendar event series. A calendar event series may include multiple calendar events that periodically repeat. For example, a calendar event series may include a calendar event that occurs every day, every weekday, once a week, once a month, or at some other time interval. The calendar events in a calendar event series can occur at the same time of day, or calendar events can occur at different times of the day. The calendar events in a calendar event series can occur on the same day each time interval (e.g., every Thursday for a weekly repeating calendar event series, or every 15^{th} for a monthly repeating calendar event series), or calendar events can occur on different days.

In some implementations, the calendar event criteria include the first user having declined a predetermined number of calendar events of the calendar event series. The predetermined number of calendar events in the series may include one, two, three, four, or some other number. Because the first user has declined the predetermined number of calendar events in the series, it may be unlikely that the first user will attend future calendar events in the series.

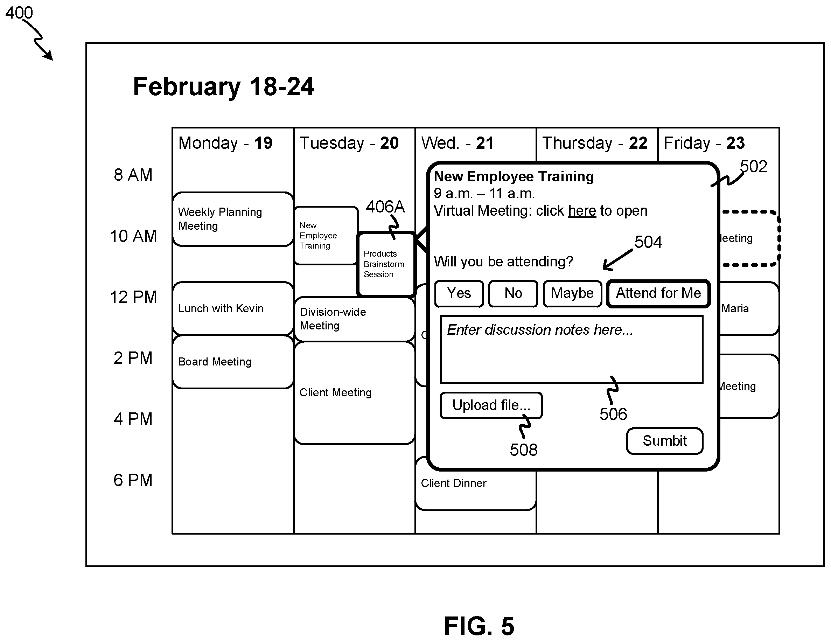

In one or more implementations, the calendar application 140 may include a calendar invite response UI element. The calendar invite response UI element may include one or more UI elements that provide information about a calendar event or calendar event series that corresponds to a calendar invite. The calendar invite response UI element may include one or more UI elements that allow the first user to select an attendance option associated with the corresponding calendar event. The attendance options may include a first option indicating that the first user accepts attending the virtual meeting 122 of the calendar event. The attendance options may include a second option indicating that the first user declines to attend the virtual meeting 122. The attendance options may include a third option requesting attendance of the virtual meeting 122 by proxy. Further information regarding the calendar invite response UI element is discussed below in relation to **FIG. 5****.**

In some implementations, the calendar event criteria include the first user having activated a UI element for a predetermined number of calendar events of the calendar event series. The UI element may include a UI element that allows the first user to indicate that the first user will attend the virtual meeting 122 by proxy. In some cases, if the first user has requested attendance by proxy of the virtual meeting 122 for previous calendar events in the calendar events series, this can indicate that the first user is likely to continue doing so.

In some implementations, the event identification manager 142 identifies a calendar event based on calendar event criteria responsive to the calendar application 140 obtaining a calendar invite for the calendar event. For example, as part of a calendar invite reception process of the calendar application 140, the event identification manager 142 can identify the calendar event as meeting one or more of the calendar event criteria. In one implementation, the event identification manager 142 identifies a calendar event based on calendar event criteria responsive to a predetermined amount of time passing since the event identification manager 142 last identified calendar events based on calendar event criteria. The amount of time may include one minute, five minutes, ten minutes, fifteen minutes, thirty minutes, one hour, two hours, six hours, or some other amount of time. In some implementations, the event identification manager 142 identifies a calendar event based on calendar event criteria daily (e.g., every day at 8 A.M. local time). In one or more implementations, the event identification manager 142 determines if a calendar event meets one or more of the calendar event criteria only if the event identification manager 142 did not previously determine whether the calendar event meets one or more of the calendar event criteria (e.g., the event identification manager 142 may not re-check calendar events that the event identification manager 142 has already determined do or do not meeting one or more of the calendar event criteria).

At block 320, processing logic causes a calendar application UI to be presented to the first user. The calendar application UI may include a UI element requesting that virtual information be provided to the first user. Virtual meeting information may include a summary of the discussion during the virtual meeting 122, a summary of a portion of the discussion, one or more action items of the virtual meeting 122, or other information generated or discussed during the virtual meeting 122. The first user may be unable to attend the virtual meeting 122. Because the first user may be unable to attend the virtual meeting 122, the first user can desire to obtain virtual meeting information. Processing logic can cause the calendar application UI to be presented on a UI 108A-N of the client device 102A-N, 104 of the first user.

In one implementation, the UI element of the calendar application UI may include a UI element that includes a list of one or more of the calendar events identified by the event identification manager 142 as meeting one or more of the calendar event criteria. The UI element may further include a UI element (e.g., a button) that the first user can interact with to indicate to the organizer(s) of the one or more identified calendar events that the first user will attend the virtual meeting(s) 122 corresponding to the one or more identified calendar events by proxy. The UI element requesting that virtual meeting information be provided to the first user may include the UI element indicating that the first user will attend the virtual meeting 122 by proxy.

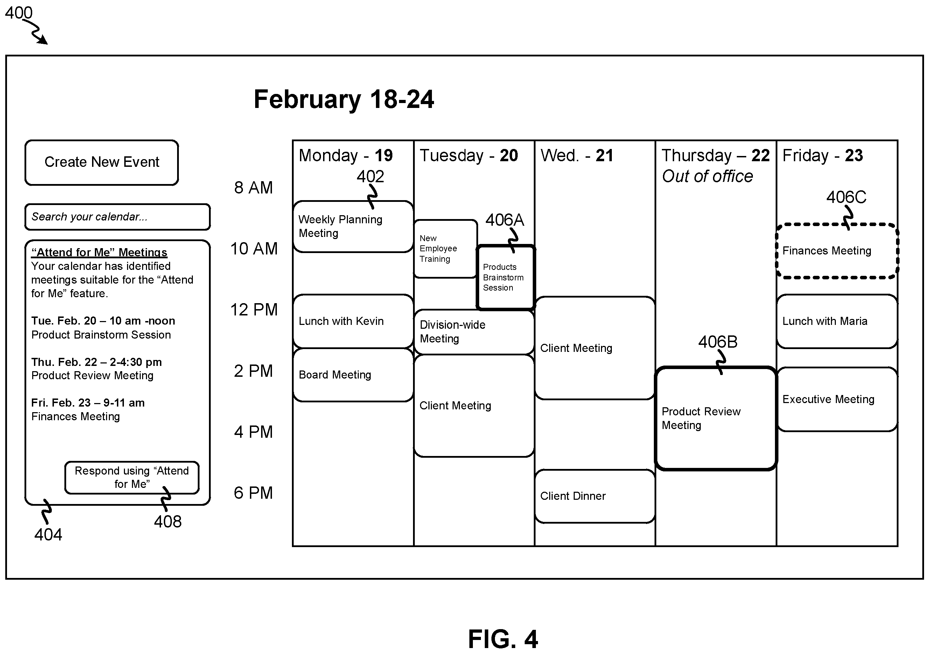

In some implementations, the UI element of the calendar application may include a calendar invite response UI element. As discussed above, the calendar invite response UI element may include UI elements (e.g., buttons) that the first user can interact with to indicate to the organizer(s) of the one or more identified calendar events whether the first user will attend the corresponding virtual meeting(s) 122, not attend, or will attend by proxy. The UI element requesting that virtual meeting information be provided to the first user may include UI element indicating that the first user will attend the virtual meeting 122 by proxy. Further information regarding the UI elements relating the block 320 is discussed below in relation to **FIG. 4** and **FIG. 5****.**

At block 330, in response to a user activation of the UI element (e.g., the UI element requesting virtual meeting information for the first user), processing logic provides a virtual meeting request of the first user to a virtual meeting application. The virtual meeting application may include the virtual meeting manager 132, the absent user manager 138, or an application executing on the virtual meeting platform 120. The virtual meeting request may include data indicating to an organizer of the virtual meeting 122 that the first user will attend the virtual meeting 122 by proxy.

In one implementation, in response to the user activation of the UI element, processing logic causes the calendar application UI to present a second UI element. The second UI element can request first data of the first user. The first data can indicate one or more topics of discussion. The virtual meeting information request may include the first data. In some implementations, the first data includes textual content. Textual content may include text data (e.g., one or more text strings) or a reference to text data (e.g., a uniform resource locator (URL) that links to text data). The first data may include audio content. Audio content may include an audio file or a reference to audio data (e.g., an audio file stored on the Internet and is accessible using a URL). The first data may include video content. Video content may include a video file or a reference to video data.

**FIG. 4** depicts an example UI 400 of the calendar application 140, in accordance with some implementations of the present disclosure. The UI 400 can be displayed on a display 107A-N of a client device 102A-N, 104. The UI 400 may include UI elements corresponding to one or more days of a week and one or more times during the day. For example, as seen in **FIG. 4****,** the UI 400 includes five column UI elements corresponding to the days Monday, Tuesday, Wednesday, Thursday, and Friday of a week. As can also be seen in **FIG. 4****,** the UI 400 can include times of the day along a left side of the UI 400. Where a day column and a time intersect, the UI 400 may include a UI element corresponding to a calendar event scheduled for that day and time. For example, as seen in **FIG. 4****,** the UI 400 includes calendar event 402 scheduled for Monday from 8:30 a.m. to 10 a.m. and entitled "Weekly Planning Meeting."

In one implementation, as discussed above in relation to block 310 of the method 300, the event identification manager 142 identifies one or more calendar events that are associated with one or more virtual meetings 122. The one or more virtual meetings 122 can be suitable for a user to attend by proxy. The UI 400 may include one or more UI elements that indicate to the user the identified calendar events. For example, as seen in **FIG. 4****,** the UI 400 includes a UI element 404 that alerts the first user that the event identification manager 142 has identified the one or more calendar events, and the UI element 404 lists the identified calendar events. As also seen in **FIG. 4****,** the UI has marked the UI elements 406A-C corresponding to the identified calendar events on the calendar (here, with thick outlines). The UI elements 406A-C may include any type of visual indication to indicate that they have been identified by the event identification manager 142, including a thick outline, being marked in a predetermined color, including a predetermined background, including a predetermined symbol, or using some other visual indication.

In one or more implementations, the UI element 404 may include a UI element 408 (e.g., a button) that the first user can interact with to respond to the identified one or more calendar events. In response to user activation of the UI element 408, the UI 400 can provide a virtual meeting information request to a virtual meeting application. As discussed above, the virtual meeting information request may include data indicating the first user's plans on attending the one or more identified calendar events corresponding to UI elements 406A-C by proxy. The first user can interact with the UI elements 406A-C corresponding to the identified one or more calendar events in order to provide first data (e.g., discussion points or other data) to be used during the corresponding virtual meeting 122, as shown in **FIG. 5****,** below. In some implementations, responsive to the first user indicating the first user is attending a calendar event by proxy, the UI element 406A-C corresponding to the calendar event may not be displayed on the UI 400 (e.g., so that the calendar only displays calendar events the user is planning on attending and calendar events that the user has not yet responded to).

**FIG. 5** depicts another example of the UI 400 of the calendar application 140, in accordance with some implementations of the present disclosure. In some implementations, responsive to a user interacting with the calendar event 406A UI element (e.g., by clicking on the calendar event 406A with a mouse or tapping the calendar event 406A on a touch screen), the UI 400 displays a detailed view 502 UI element corresponding to the calendar event 406A. The detailed view 4502 UI element can display further information associated with the calendar event 406A. For example, as seen in **FIG. 5****,** the detailed view 502 includes the title of the calendar event 406A, the date and time of the calendar event 406A, and a location of the calendar event. The location may include a virtual meeting 122. The first user can access the virtual meeting 122 by interacting with a certain portion of the detailed view 502 (e.g., a URL included in the detailed view 502).

In one or more implementations, the detailed view 502 includes one or more UI elements that allow the first user to indicate whether the user plans on attending the calendar event 402. For example, as seen in **FIG. 5****,** the detailed view 502 includes buttons 504 labeled "Yes" to indicate that the user plans on attending, "No" to indicate that the user does not plan on attending, and "Maybe" to indicate that the user may attend. The buttons 504 can include an "Attend for Me" button to indicate that the first user plans attending the corresponding virtual meeting 122 by proxy. Responsive to the user interacting with the "Attend for Me" button, as seen in **FIG. 5****,** the detailed view 502 can display one or more UI elements where the user can provide the first data. For example, the detailed view 502 can display a text box 506 where the user can input textual content or where the user can input a reference (e.g., a URL) to video content, audio content, or other types of content. The UI element 506 can display a button 508 that opens a file selector that allows the user to select an audio file, video file, or another type of file. Responsive to the user finishing inputting the first data (e.g., by interacting with a "Submit" button, as seen in **FIG. 5****),** the first data can be provided to the absent user manager 138.

In some implementations, the first user can modify the first data after the absent user manager 138 obtains the first data. For example, the user can interact with the detailed view 502 again and use the text box 506 or file selector button 508 to input different first data, modify the originally provided first data, or remove at least a portion of the originally provided first data. In some implementations, the first user can modify the response from "Attend for Me" to "Yes," indicating that the first user plans on attending the corresponding virtual meeting 122.

In one implementation, the calendar application 140 can cause a second calendar application UI to be presented to a second user on the second user's client device 102A-N, 104. The second user may be an organizer of a calendar event (e.g., the calendar event 406A). The second calendar application UI can be similar to the UI 400, however, the second calendar application UI can display calendar events organized or accepted by the second user.

The second user can interact with the calendar event 406A to cause the second calendar application UI to display a detailed view 502 of the calendar event. The detailed view 502 may include a list of users that have been invited to the calendar event. The list of users can indicate, for each user, a status of the user's planned attendance of the calendar event. The status may include responses such as "yes," "no," "maybe," or "attending using attend-for-me." An "attending using attend-for-me" response can indicate that the respective user will attend the corresponding virtual meeting 122 by proxy and has provided first data (e.g., discussion points) to be discussed during the virtual meeting 122.

In one or more implementations, the second user can configure a calendar event to not allow a user to attend the corresponding virtual meeting 122 by proxy. The second user can configure the calendar event to not allow attendance by proxy when initially generating the calendar event or when modifying the calendar event after it has been initially generated.

In one implementation, the virtual meeting manager 132 causes a virtual meeting UI 108A-N to be presented during the virtual meeting 122 between one or more participants. The virtual meeting UI 108A-N may include a UI element associated with the first data provided by the first user, who is not present during the virtual meeting 122. The UI element associated with the first data can be presented responsive to the absent user manager 138 providing the first data to the UI controller 136, which can cause the UI element to be displayed in the UI 108A-N.

In one implementation, the UI element includes a side bar disposed on a side of the virtual meeting UI 108A-N. The side bar may include an area of the UI 108A-N on a left side, right side, top side, bottom side, or other area of the UI 108A-N that displays information. In some implementations, the UI element includes a notification presented in the virtual meeting UI 108A-N. The notification may include a pop-up dialog box in the UI 108A-N or some other notification element of the UI 108A-N. The UI 108A-N can present content based on the first data of the first user in some other manner.

The UI element may include content based on the first data provided by the user. For example, where the first data includes textual content, the UI element may include one or more strings of text, a URL, or content from the location referenced by the URL (e.g., a webpage or embedded content from a webpage). Where the first data includes audio content, the UI element may include a media player that allows a user to play the audio content. Where the first data includes video content, the UI element may include a media play that allows a user to watch the video content.

In some implementations, the virtual meeting manager 132 causes the presentation of the UI element associated with the first data in response to a predetermined amount of time elapsing since a beginning of the virtual meeting 122. This can allow participants of the virtual meeting 122 time to join the meeting and perform other initial tasks before beginning discussion of one or more topics of the virtual meeting 122. A configuration setting of the virtual meeting 122 may include the predetermined amount of time. The calendar invite response can include the predetermined amount of time (which can allow the user attending by proxy to set the predetermined amount of time). In one implementation, processing logic causes the presentation of the UI element associated with the first data in response to the predetermined amount of time elapsing since a different virtual meeting 122 event (e.g., a predetermined number of virtual meeting 122 invitees joining the virtual meeting, a predetermined portion of the virtual meeting 122 invitees joining the virtual meeting 122, a host of the virtual meeting 122 interacting with a UI 108A-N element indicating the start of a discussion of topics for the virtual meeting 122, or some other event).

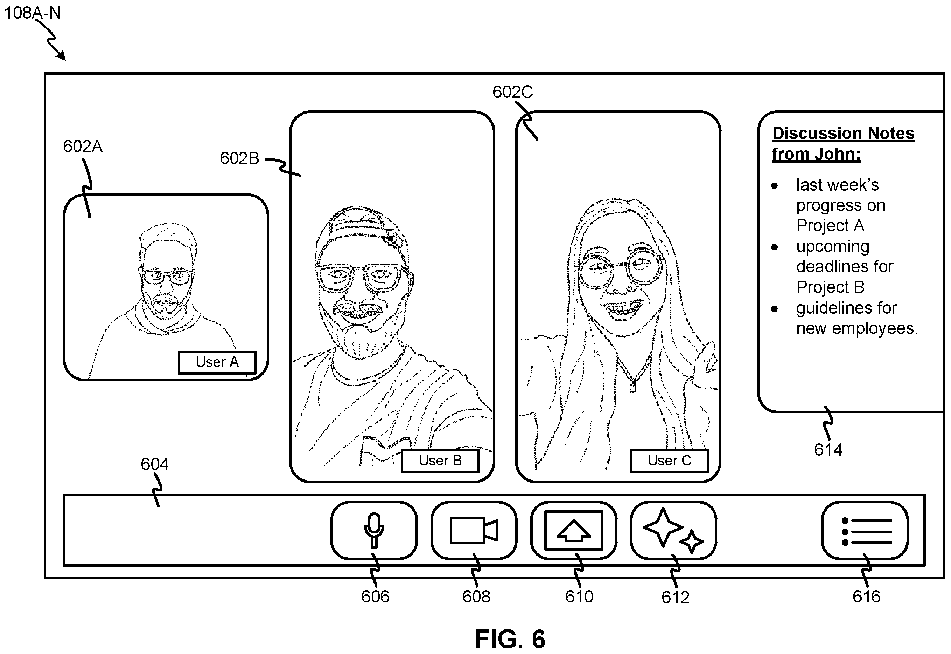

**FIG. 6** depicts an example virtual meeting UI 108A-N, according to some implementations. The virtual meeting UI 108A-N may include one or more regions 602A-C each corresponding to a visual item of the virtual meeting 122, such as a video stream provided by a client device 102A-N, 104 of a participant of the virtual meeting 122. The virtual meeting UI 108A-N can include a tool bar 604 that includes one or more UI elements configured to perform virtual meeting operations. For example, as seen in **FIG. 6****,** the tool bar 604 includes an audio control button 606 used to mute and unmute a participant's audio stream, a camera control button 608 used to mute and unmute a participant's video stream, and a screen share button 610 used to share a participant's client device's 102A-N, 104 screen with other participants of the virtual meeting 122. In some implementations, the tool bar 604 may include one or more buttons 612 that, responsive to a participant interacting with the buttons 612, cause an AI model 230 to perform one or more virtual meeting 122 functions (e.g., generate a summary of at least a portion of the virtual meeting 122, generate action items, or other virtual meeting functionality discussed herein).

In one implementation, the virtual meeting UI 108A-N includes a side bar 614 UI element. The side bar 614 UI element can display information based on the first data provided by the first user, who is attending by proxy. For example, as seen in **FIG. 6****,** the side bar 614 includes text data that includes discussion points provided by the first user. As discussed above, the side bar 614 may include a reference to textual content, video content, audio content, or other types of content. The side bar 514 may include a media player within the side bar 614 used to play audio content or video content of the first data. In some implementations, the tool bar 604 includes a button that causes the UI 108A-N to display or hide the side bar 614.

In one or more implementations, the absent user manager 138 generates a summary based on one or more of the virtual meetings 122 that the first user attended by proxy. The summary can cover a presentation of at least a portion of the first data (e.g., discussion points provided by the first user) during the virtual meeting 122. During the virtual meeting 122, the participants of the virtual meeting 122 can discuss multiple topics or discussion points. The first user may desire to know what was discussed during the virtual meeting 122 about the first data, thus, the summary can cover discussion, during the virtual meeting 122, of the first data.

In one or more implementations, the virtual meeting manager 132 or some other component of the server 130 can generate a transcript of the virtual meeting 122. Generating the transcript of the virtual meeting 122 may include using a speech-to-text AI model 230. The speech-to-text AI model 230 can receive, as input, audio data of the one or more audio streams corresponding to the different participants of the virtual meeting 122 and can generate a text representation of the audio data to generate a transcript of the virtual meeting 122. The virtual meeting manager 132 can store the transcript, e.g., on the server 130 or the data store 150. The speech-to-text AI model 230 can generate the transcript in real time during the virtual meeting 122. The absent user manager 138 can have access to the transcript and can use the transcript of the virtual meeting 122 to generate the summary of the one or more virtual meetings 122.

In some implementations, generating the summary includes using a generative AI model 230 to generate the summary. The generative AI model 230 can be part of the AI inference subsystem 139 of the absent user manager 138. The generative AI model 230 may include an LLM or another type of generative AI model 230 as discussed above in relation to **FIGS 2A** and **2B****.** Using the generative AI model 230 to generate the summary may include causing a generative AI prompt to be input into the generative AI model 230. The generative AI prompt can be based, at least in part, on one or more transcripts of one or more virtual meetings that the first user attend by proxy. The generative AI prompt may include a command to generate the summary based on the one or more transcripts.

As an example, the absent user manager 138 can generate a generative AI prompt that includes the command "Generate a summary of the discussion of the following meeting transcripts," and the generative AI prompt may further include the transcripts of the virtual meeting(s) 122 that the first user attended by proxy. In some implementations, the absent user manager 138 can generate a generative AI prompt for each meeting transcript to be summarized and, after the individual summaries have been generated, can combine the multiple summaries into a single summary.

In one implementation, a summary includes a text summary. The text summary can include one or more strings of text. The summary may include data in another format (e.g., an audio summary that includes audio data summarizing the virtual meeting 122). In one implementation, the summary includes video content. The video content may include a recording of the virtual meeting UI 108A-N and the associated audio data during a portion of the virtual meeting 122. The portion of the virtual meeting 122 may include the presentation of at least a portion of the first data during the virtual meeting 122.

In some implementations, the absent user manager 138 causes the summary to be accessible by a client device 102A-N, 104 of the first user. In some implementations, the absent user manager 138 stores the summary on the server 130, the data store 150, a cloud storage, a content management platform, or some other location. Causing the summary to be accessible by the client device 102A-N, 104 of the first user may include providing a reference to the summary stored on the server 130, in the data store 150, in the cloud storage, on the content management platform, etc. The summary being accessible by the client device 102A-N, 104 of the first user may include the absent user manager 138 providing a reference to the summary (e.g., a URL associated with the stored summary) to the first user's client device 102A-N, 104. In one implementation, the absent user manager 138 provides the summary to the client device 102A-N, 104 (e.g., by providing a file containing the summary to the client device 102A-N, 104 over the network 160).

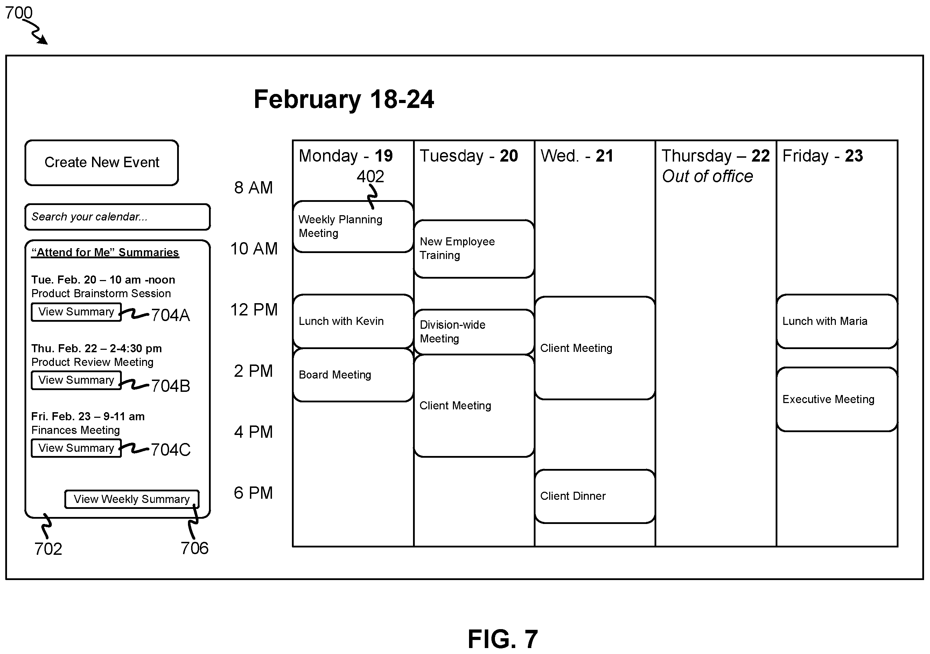

In some implementations, causing the summary to be accessible by the client device 102A-N, 104 of the first user includes causing the summary to be accessible from the calendar application 140. **FIG. 7** depicts an example UI 700 of the calendar application 140. The calendar application's 140 UI 700 may be similar to the calendar application UI 400 of **FIG. 4****,** for example, the UI 700 may also include UI elements corresponding to one or more days of a week, one or more times during the day, or one or more calendar events. In some implementations, the UI 700 includes a UI element 702. The UI element 702 may include a list of calendar events that the first user attended by proxy. One or more of the calendar events of the UI element 702 may include a UI element 704A-C (e.g. a button) that can allow the first user to access a summary associated with the virtual meeting 122 corresponding to the respective calendar event. The UI element 702 may include another UI element 706 that can allow the first user to access a weekly (or other time interval) summary of the virtual meetings 122 corresponding to the calendar events listed in the UI element 702. In some implementations, the first user can interact with a calendar event presented in the UI 700, and the UI 700 can present another UI element corresponding to the calendar event. The UI element may include a UI element that allows the first user to access a summary associated with the virtual meeting 122 corresponding to the calendar event.

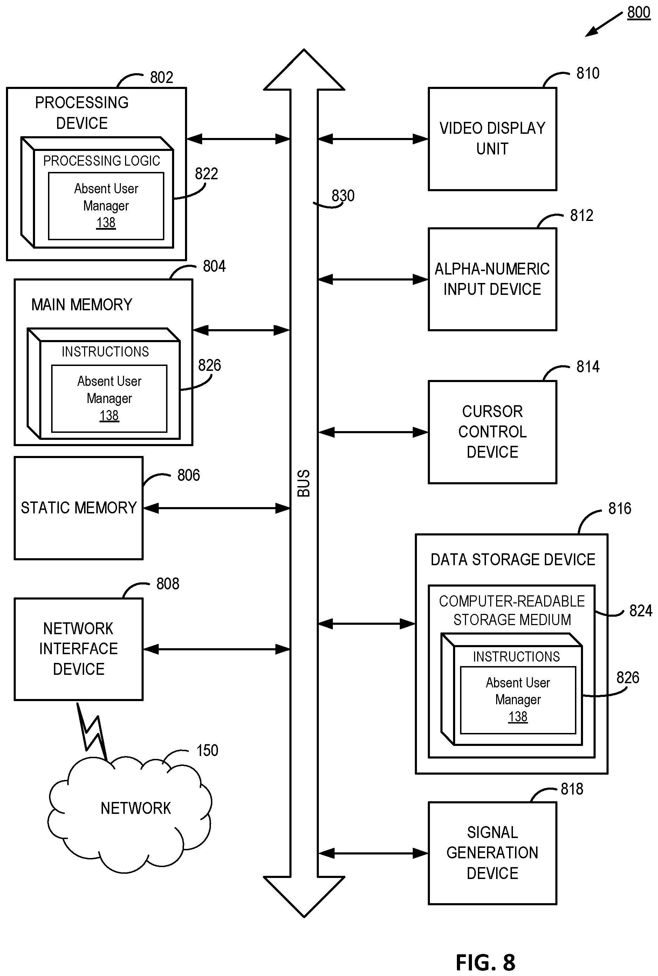

**FIG. 8** is a block diagram illustrating an example computer system, in accordance with implementations of the present disclosure. The computer system 800 can include a client device 102A-N, 104, the virtual meeting platform 120, or the server 130 in **FIG. 1****.** The machine can operate in the capacity of a server or an endpoint machine, in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processing device (processor) 802, a main memory 804 (e.g., read-only memory (ROM), flash memory, dynamic random access memory (DRAM) such as synchronous DRAM (SDRAM), double data rate (DDR SDRAM), or DRAM (RDRAM), etc.), a static memory 806 (e.g., flash memory, static random access memory (SRAM), etc.), and a data storage device 816, which communicate with each other via a bus 830.

The processing device 802 represents one or more general-purpose processing devices such as a microprocessor, central processing unit, or the like. More particularly, the processing device 802 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 802 can also be one or more special-purpose processing devices such as an application specific integrated circuit (ASIC), a field programmable gate array (FPGA), a digital signal processor (DSP), network processor, or the like. The processing device 802 is configured to execute the processing logic 822 for performing the operations discussed herein (e.g., the operations of the absent user manager 138 or the event identification manager 142).

The computer system 800 can further include a network interface device 808. The computer system 800 also can include a video display unit 810 (e.g., a liquid crystal display (LCD) or a cathode ray tube (CRT)), an input device 812 (e.g., a keyboard, and alphanumeric keyboard, a motion sensing input device, touch screen), a cursor control device 814 (e.g., a mouse), and a signal generation device 818 (e.g., a speaker).

The data storage device 816 can include a non-transitory machine-readable storage medium 824 (sometimes referred to as a "computer-readable storage medium") on which is stored one or more sets of instructions 826 (e.g., the instructions to carry out one or more operations of the absent user manager 138 or the event identification manager 142) embodying any one or more of the methodologies or functions described herein. The instructions can also reside, completely or at least partially, within the main memory 804 and/or within the processing device 802 during execution thereof by the computer system 800, the main memory 804 and the processing device 802 also constituting machine-readable storage media. The instructions can further be transmitted or received over the network 160 via the network interface device 808.

In one implementation, the instructions 826 include instructions for determining visual items for presentation in a user interface of a virtual meeting. While the computer-readable storage medium 824 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

The specification includes the following subject-matter expressed in the form of clauses 1-22:
1. A method, comprising:
   identifying, by a calendar application of a first user and based on one or more calendar event criteria, a calendar event that corresponds to a virtual meeting, wherein the first user of the calendar application is invited to attend the virtual meeting;
   causing a calendar application user interface (UI) to be presented to the first user, wherein the calendar application UI comprises a UI element requesting that virtual meeting information be provided to the first user who is unable to attend the virtual meeting; and
   in response to a user activation of the UI element, providing a virtual meeting information request of the first user to a virtual meeting application.
2. The method of clause 1, wherein the one or more calendar event criteria comprise the calendar event indicating that the first user's attendance of the calendar event is optional.
3. The method of clause 1 or clause 2, wherein the one or more calendar event criteria comprise the calendar event occurring during a time period when the first user has an unavailable status.
4. The method of any of clauses 1-3, wherein the one or more calendar event criteria comprise the first user having not sent a calendar event response for the calendar event.
5. The method of any of clauses 1-4, wherein the one or more calendar event criteria comprise the calendar event occurring during a predetermined time interval.
6. The method of any of clauses 1-5, wherein the calendar event comprises a calendar event series, and wherein the calendar event series comprises a plurality of calendar events that periodically repeat.
7. The method of clause 6, wherein the one or more calendar event criteria comprise the first user having declined a predetermined number of calendar events of the calendar event series.
8. The method of clause 6 or clause 7, wherein the one or more calendar event criteria comprise the first user having activated the UI element for a predetermined number of calendar events of the calendar event series.
9. The method of any of clauses 1-8, wherein the UI element comprises a plurality of attendance options, comprising:
   a first option indicating that the first user accepts attending the virtual meeting;
   a second option indicating that the first user declines to attend the virtual meeting; and
   a third option requesting attendance of the virtual meeting by proxy, wherein requesting attendance by proxy represents the virtual meeting information request.
10. A system, comprising:
   a memory; and
   a processing device, coupled to the memory, configured to perform operations comprising:
      identifying, by a calendar application of a first user and based on one or more calendar event criteria, a calendar event that corresponds to a virtual meeting, wherein the first user of the calendar application is invited to attend the virtual meeting,
      causing a first calendar application user interface (UI) to be presented to the first user, wherein the first calendar application UI comprises a UI element requesting that virtual meeting information be provided to the first user who is unable to attend the virtual meeting, and
      in response to a user activation of the UI element, providing a virtual meeting information request of the first user to a virtual meeting application.
11. The system of clause 10, wherein the operations further comprise:
   in response to the user activation of the first UI element, causing the first calendar application UI to present a second UI element requesting first data of the first user, wherein the first data comprises textual content indicating one or more topics of discussion; and
   including, as part of the virtual meeting information request, the first data.
12. The system of clause 10 or clause 11, wherein the operations further comprise:
   causing a generative AI prompt to be input into a generative AI model, wherein:
      the generative AI prompt is based on, at least in part, one or more transcripts of one or more virtual meetings the first user attended by proxy, wherein the one or more virtual meetings the first user attended by proxy includes the virtual meeting corresponding to the calendar event, and
      the generative AI prompt includes a command to generate a summary based on the one or more transcripts of the one or more virtual meetings; and
   causing the summary to be accessible by a client device of the first user.
13. The system of any of clauses 10-12, wherein:
   the operations further comprise causing a second calendar application UI to be presented to a second user, wherein the second user comprises an organizer of the calendar event; and
   the second calendar application UI comprises a second UI element indicating the first user will attend the virtual meeting by proxy.
14. The system of any of clauses 10-13, wherein the one or more calendar event criteria comprise at least one of:
   the calendar event indicating that the first user's attendance of the calendar event is optional; or
   the calendar event occurring during a time period when the first user has an unavailable status.
15. The system of any of clauses 10-14, wherein the one or more calendar event criteria comprise at least one of:
   the first user having not sent a calendar event response for the calendar event; or
   the calendar event occurring during a predetermined time interval.
16. The system of any of clauses 10-15, wherein the calendar event comprises a calendar event series, wherein the calendar event series comprises a plurality of calendar events that periodically repeat.
17. A non-transitory computer-readable storage medium comprising instructions that, when executed by a processing device, cause the processing device to:
   identify, by a calendar application of a first user and based on one or more calendar event criteria, a calendar event that corresponds to a virtual meeting, wherein the first user of the calendar application is invited to attend the virtual meeting;
   cause a calendar application user interface (UI) to be presented to the first user, wherein the calendar application UI comprises a UI element requesting that virtual meeting information be provided to the first user who is unable to attend the virtual meeting; and
   in response to a user activation of the UI element, provide a virtual meeting information request of the first user to a virtual meeting application.
18. The computer-readable storage medium of clause 17, wherein the one or more calendar event criteria comprise at least one of:
   the calendar event indicating that the first user's attendance is optional; or
   the calendar event occurring during a time period when the first user has an unavailable status.
19. The computer-readable storage medium of clause 17 or clause 18, wherein the one or more calendar event criteria comprise at least one of:
   the first user having not sent a calendar event response for the calendar event; or
   the calendar event occurring during a predetermined time interval.
20. The computer-readable storage medium of any of clauses 17-19, wherein the operations further comprise:
   causing a generative AI prompt to be input into a generative AI model, wherein:
      the generative AI prompt is based on, at least in part, one or more transcripts of one or more virtual meetings the first user attended by proxy, wherein the one or more virtual meetings the first user attended by proxy includes the virtual meeting corresponding to the calendar event, and
      the generative AI prompt includes a command to generate a summary based on the one or more transcripts of the one or more virtual meetings; and
   causing the summary to be accessible by a client device of the first user.
21. A computer program product comprising instructions which, when executed by one or more processors, cause the processors to perform the method of any of clauses 1-9.
22. Computer-executable instructions which, when executed by one or more processors, cause the processors to perform the method of any of clauses 1-9.

## Claims

1. A method, comprising:
identifying, by a calendar application of a first user and based on one or more calendar event criteria, a calendar event that corresponds to a virtual meeting, wherein the first user of the calendar application is invited to attend the virtual meeting;
causing a calendar application user interface (UI) to be presented to the first user, wherein the calendar application UI comprises a UI element requesting that virtual meeting information be provided to the first user who is unable to attend the virtual meeting; and
in response to a user activation of the UI element, providing a virtual meeting information request of the first user to a virtual meeting application.

2. The method of claim 1, wherein the one or more calendar event criteria comprise the calendar event indicating that the first user's attendance of the calendar event is optional; and/or
wherein the one or more calendar event criteria comprise the calendar event occurring during a time period when the first user has an unavailable status; and/or
wherein the one or more calendar event criteria comprise the first user having not sent a calendar event response for the calendar event; and/or
wherein the one or more calendar event criteria comprise the calendar event occurring during a predetermined time interval.

3. The method of claim 1 or claim 2, wherein the calendar event comprises a calendar event series, and wherein the calendar event series comprises a plurality of calendar events that periodically repeat.

4. The method of claim 3, wherein the one or more calendar event criteria comprise the first user having declined a predetermined number of calendar events of the calendar event series; and/or
wherein the one or more calendar event criteria comprise the first user having activated the UI element for a predetermined number of calendar events of the calendar event series.

5. The method of any of claims 1-4, wherein the UI element comprises a plurality of attendance options, comprising:
a first option indicating that the first user accepts attending the virtual meeting;
a second option indicating that the first user declines to attend the virtual meeting; and
a third option requesting attendance of the virtual meeting by proxy, wherein requesting attendance by proxy represents the virtual meeting information request.

6. A system, comprising:
a memory; and
a processing device, coupled to the memory, configured to perform operations comprising:
identifying, by a calendar application of a first user and based on one or more calendar event criteria, a calendar event that corresponds to a virtual meeting, wherein the first user of the calendar application is invited to attend the virtual meeting,
causing a first calendar application user interface (UI) to be presented to the first user, wherein the first calendar application UI comprises a UI element requesting that virtual meeting information be provided to the first user who is unable to attend the virtual meeting, and
in response to a user activation of the UI element, providing a virtual meeting information request of the first user to a virtual meeting application.

7. The system of claim 6, wherein the operations further comprise:
in response to the user activation of the first UI element, causing the first calendar application UI to present a second UI element requesting first data of the first user, wherein the first data comprises textual content indicating one or more topics of discussion; and
including, as part of the virtual meeting information request, the first data.

8. The system of claim 6 or claim 7, wherein the operations further comprise:
causing a generative AI prompt to be input into a generative AI model, wherein:
the generative AI prompt is based on, at least in part, one or more transcripts of one or more virtual meetings the first user attended by proxy, wherein the one or more virtual meetings the first user attended by proxy includes the virtual meeting corresponding to the calendar event, and
the generative AI prompt includes a command to generate a summary based on the one or more transcripts of the one or more virtual meetings; and
causing the summary to be accessible by a client device of the first user.

9. The system of any of claims 6-8, wherein:
the operations further comprise causing a second calendar application UI to be presented to a second user, wherein the second user comprises an organizer of the calendar event; and
the second calendar application UI comprises a second UI element indicating the first user will attend the virtual meeting by proxy.

10. The system of any of claims 6-9, wherein the one or more calendar event criteria comprise at least one of:
the calendar event indicating that the first user's attendance of the calendar event is optional; or
the calendar event occurring during a time period when the first user has an unavailable status; or
the first user having not sent a calendar event response for the calendar event; or
the calendar event occurring during a predetermined time interval.

11. The system of any of claims 6-10, wherein the calendar event comprises a calendar event series, wherein the calendar event series comprises a plurality of calendar events that periodically repeat.

12. A non-transitory computer-readable storage medium comprising instructions that, when executed by a processing device, cause the processing device to:
identify, by a calendar application of a first user and based on one or more calendar event criteria, a calendar event that corresponds to a virtual meeting, wherein the first user of the calendar application is invited to attend the virtual meeting;
cause a calendar application user interface (UI) to be presented to the first user, wherein the calendar application UI comprises a UI element requesting that virtual meeting information be provided to the first user who is unable to attend the virtual meeting; and
in response to a user activation of the UI element, provide a virtual meeting information request of the first user to a virtual meeting application.

13. The computer-readable storage medium of claim 12, wherein the one or more calendar event criteria comprise at least one of:
the calendar event indicating that the first user's attendance is optional; or
the calendar event occurring during a time period when the first user has an unavailable status; or
the first user having not sent a calendar event response for the calendar event; or
the calendar event occurring during a predetermined time interval.

14. The computer-readable storage medium of claim 12 or claim 13, wherein the operations further comprise:
causing a generative AI prompt to be input into a generative AI model, wherein:
the generative AI prompt is based on, at least in part, one or more transcripts of one or more virtual meetings the first user attended by proxy, wherein the one or more virtual meetings the first user attended by proxy includes the virtual meeting corresponding to the calendar event, and
the generative AI prompt includes a command to generate a summary based on the one or more transcripts of the one or more virtual meetings; and
causing the summary to be accessible by a client device of the first user.

15. A computer program product comprising instructions which, when executed by one or more processors, cause the processors to perform the method of any of clauses 1-5.
